# EUROPEAN PATENT SPECIFICATION

(11) **EP 0 806 167 B1**
(45) Date of publication and mention of the grant of the patent: **06.02.2002**
(21) Application number: 97201381.7
(22) Date of filing: 07.05.1997
(51) Int. Cl.: A47J 31/02, A47J 31/057

(54) **Assembly for preparing coffee**
Kaffeezubereitungsset
Ensemble à préparer du café

(30) Priority: 08.05.1996 NL 1003067
(43) Date of publication of application: 12.11.1997
(73) Proprietor: Sara Lee/DE N.V., 3532 AA Utrecht (NL)
(72) Inventor: De Bruin, Wilhelmus Johannes, 1325 GN Almere (NL); Akkerman-Theunisse, Johanna Wilhelmina Gerarda, 3971 AN Driebergen (NL)
(74) Representative: Smulders, Theodorus A.H.J., Ir.

(56) References cited:
- WO-A-91/20170
- DE-A- 4 301 157
- DE-U- 8 908 085
- DE-U- 9 107 129
- FR-A- 1 038 771
- US-A- 2 052 476
- US-A- 4 069 751
- US-A- 4 104 957
- US-A- 4 999 470

## Description

The invention relates to an assembly for preparing a desired quantity of coffee corresponding too one or two cups of coffee and provided with a water container for receiving water and an insert filter holder for receiving ground coffee, wherein the water container is positioned on top of the insert filter holder and is provided with at least one outflow opening which opens above the insert filter holder, the insert filter holder comprises a filter forming a barrier to the ground coffee and a passage for coffee extract, so that, in use, water flows from the water container to the insert filter holder via the outflow opening, and the coffee extract flows from the insert filter holder via the filter. Such an assembly is known from US 4,069,571.

Recent research has proved that thereis a need for preparing a relatively small quantity of coffee which is for instance sufficient for filling one or two cups or a mug. Typically, a user has a conventional domestic coffee maker at his disposal which is suitable for preparing four or more cups of coffee. Such a coffee maker typically consists of a water reservoir to be filled with cold water, a metering and heating device, a coffee pot, a filter holder suitable for being placed on the coffee pot and a hotplate on which the coffee pot can be placed.

In use, a paper filter ('filter bag') is placed in the filter holder. After this, the filter holder, i.e. the paper filter, is filled with for instance five spoonfuls of ground coffee and the water reservoir is filled with the quantity of water corresponding thereto. Then, the apparatus is switched on and water is passed from the water reservoir to a heating element, after which the heated water is poured on top of the coffee bed contained in the filter holder. In the coffee bed, a coffee extract is formed which flows, via the paper filter and an aperture in the filter holder, towards the coffee pot. In this manner, all the water from the water reservoir is gradually converted into a coffee extract.

However, a problem arises when a small quantity of coffee, such as for instance two cups, is to be prepared. In that case, one or two spoonfuls of ground coffee are introduced into the filter holder. Also, the water reservoir is filled with a quantity of water corresponding to the above-mentioned two cups. Although the amount of ground coffee in the filter holder and the quantity of water in the water reservoir are adapted to each other in the proper ratio, the coffee extract proves not to have the desired quality. For instance, the coffee-making efficiency of one cup proves to be about 23%, and the coffee-making efficiency of two cups proves to be about 25%. Such efficiencies are particularly low and result in a coffee extract that is weak and of poor flavor. One object of the invention is to meet this problem. It is a further object of the invention to provide an assembly which can also be used for preparing said quantity of coffee by other means than an existing multiple coffee maker.

The invention meets this problem and, accordingly, has as a characteristic feature that the assembly is of substantially conical design, wherein the outer diameter of the assembly decreases at least substantially from the top downwards, so that the outward shape of the assembly is adapted to be placed in the tapering filter holder of a multicup coffee maker for preparing coffee by means of an existing multicup coffeemaker wherein the water container further comprises a temperature-sensitive closing valve where said valve closes the outflow opening when the water container is filled with water having a temperature lower than a predetermined value and which releases the outflow opening when the water container is filled with water having a temperature higher than or equal to the predetermined value, so that, in use, hot water is fed to the insert filter holder when the water container is filled with water having a temperature higher than or equal to said predetermined value, so that the assembly is also suitable for preparing coffee by means of a microwave oven.

According to the invention, the assembly is suitable for being placed in the filter holder of the coffee maker. This involves the insert filter holder being filled with, for instance, two spoonfuls of coffee when it is the intention to prepare two cups of coffee. The water reservoir of the coffee maker is filled again with a quantity of water corresponding to two cups of coffee. According to the invention, it has been found that presently, the coffee-making efficiency can be improved by more than 3% (up to, for instance, 26-27%) to obtain a coffee-extract of a good flavor.

The invention is inter alia based on the insight that for preparing one or two cups of coffee by means of a conventional coffee maker, the height of the coffee bed in the filter holder is too low. Moreover, the amount of water fed to the relatively thin coffee bed per unit of time is too large. The unduly great flow of water on the one hand and the relatively low coffee bed on the other result in the above-mentioned low coffee-making efficiency. As according to the invention, an insert filter is used that can have a smaller dimension than the filter holder, a higher coffee bed can be obtained at the same amount of ground coffee. On the other hand, the outflow opening of the water container determines the magnitude of the flow of water and is for instance dimensioned so that the flow of water decreases by a factor 2.5 relative to the flow of water generated by the coffee maker itself. The combination of these two measures results in the improved efficiency.

According to the invention the assembly, is also suitable for preparing coffee in a microwave oven. For this purpose, the water container further comprises the temperature-sensitive closing valve. If it is desired to make coffee by means of a microwave oven, the insert filter holder is first filled with the desired amount of ground coffee. The water container is filled with the desired quantity of water. Then, the water container is positioned on the insert filter holder and the thus obtained assembly is placed on a coffee extract container, such as for instance a mug. The coffee extract container and the assembly are placed in the microwave oven and the microwave oven is switched on, so that the water in the water container will be heated. If the water in the water container reaches a temperature higher than the predetermined temperature, the temperature-sensitive valve will release the passage of the water container so that hot water is fed from the water container to the ground coffee in the insert filter holder. The magnitude of the flow of water is again determined by the outflow opening of the water container. The hot water will be poured onto the coffee bed, whereupon the coffee extract can form itself to subsequently flow to the coffee extract container via the insert filter holder. After for instance two minutes, all the water from the water container has flown, via the insert filter holder, to the coffee extract container in the form of coffee extract, and the microwave oven can be switched off. The coffee is now ready for consumption.

It is observed that US Patent 4,069,751 describes an assembly likewise provided with a water container and a filter holder. However, because of its outward shape, the assembly is not suitable for being placed in a tapering filter holder of an existing multicup coffee maker. Further it is observed that US 4,104,957 discloses an assembly for preparing coffee in a microwave oven. However the assembly is designed for preparing quantities of coffee larger than one or two cups. Furthermore it is not suitable to be positioned in an existing tapering filter holder of a multicup coffee maker.

Presently, the invention will be specified with reference to the accompanying drawings. In these drawings:
Fig. 1 is a top plan view of an insert filter holder of an assembly according to the invention;
Fig. 2 shows a first side elevation of the insert filter holder of Fig. 1;
Fig. 3 shows a second side elevation of the insert filter holder of Fig. 1;
Fig. 4 is a top plan view of a possible embodiment of a water container of an assembly according to the invention;
Fig. 5 shows a cross section of the water container according to Fig. 4;
Fig. 6 shows the assembly comprising the insert filter holder of Figs. 1-3 and the water container of Figs. 4 and 5;
Fig. 7 shows a filter holder of a conventional coffee maker;
Fig. 8 shows a conventional coffee maker comprising the filter holder according to Fig. 7 and the assembly according to Fig. 6;
Fig. 9 shows a possible embodiment of an annular adapter of an assembly according to the invention;
Fig. 10 is a top plan view of the annular adapter according to Fig. 9;
Fig. 11 shows an assembly consisting of the insert filter holder according to Fig. 1, the water container according to Fig. 4 and the adapter according to Fig. 9, which assembly is placed on a mug;
Fig. 12 shows an assembly arranged for filling the insert filter holder with ground coffee;
Fig. 13 is a top plan view of an alternative embodiment of an insert filter holder according to the invention;
Fig. 14 is a first view of the insert filter holder according to Fig. 13; and
Fig. 15 is a second view of the insert filter holder according to Fig. 13.

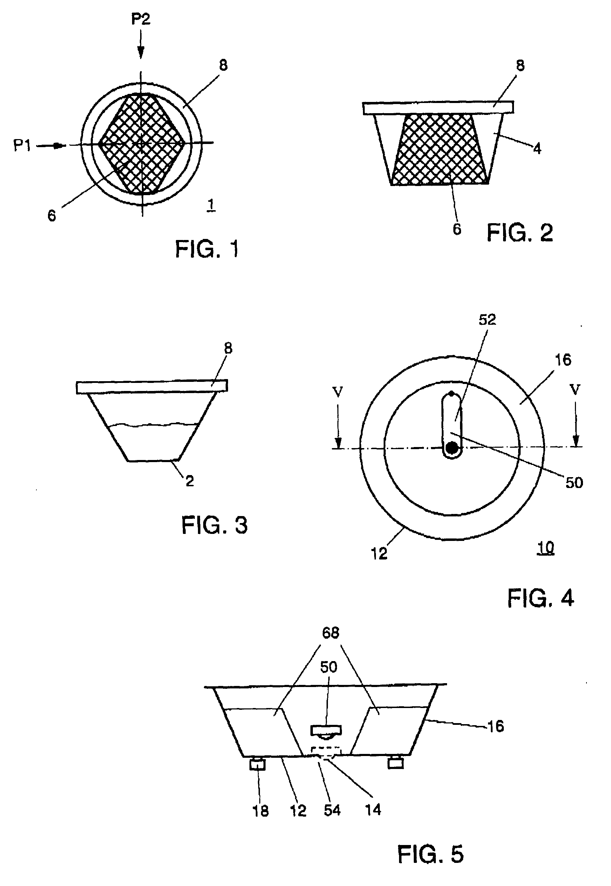

In Figs. 1-3, reference numeral 1 designates an insert filter holder of an assembly according to the invention. The insert filter holder 1 comprises a bottom part 2 and obliquely vertical sidewalls 4 extending from the bottom part 2. The outer diameter of the insert filter holder 1 increases from the bottom upwards, so that the insert filter holder is of conical design. A portion 6 of the sidewall is provided with fine-mesh through-flow openings. This portion 6 thus forms a filter that forms a barrier to ground coffee and a passage for the fluid extract of the coffee. The portion 6 is popularly known as a 'gold filter' and is of metal construction. In this example, the remaining portion of the insert filter holder is made of plastic.

The vertical sidewalls 4 have their upper ends provided with an annular edge 8. For the sake of completeness, it is further observed that Fig. 2 shows the side elevation of the insert filter holder in the direction P₁ of Fig. 1 and Fig. 3 shows the side elevation of the insert filter holder in the direction P₂ of Fig. 1.

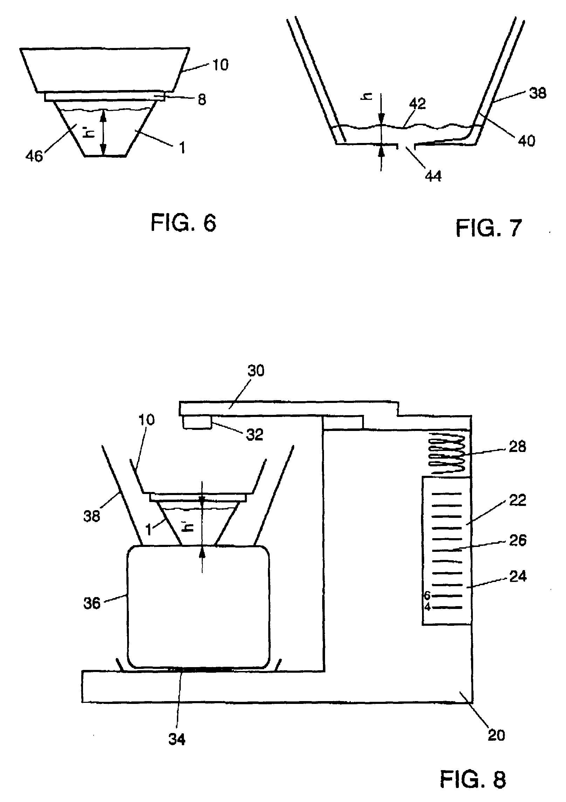

The assembly according to the invention further comprises a water container 10, as shown in Figs. 4 and 5. The water container 10 comprises a more or less flat bottom 12 in which, in this example, one outflow opening 14 is provided. Extending obliquely upwards from the edge of the annular flat bottom 12 is a conical sidewall 16, the arrangement being such that the outer diameter of the water reservoir increases from the bottom upwards. The water container 10 further has its bottom side provided with a bayonet catch 18 capable of cooperating with the annular edge 8 of the insert filter holder 1, the arrangement being such that the water container 10 can be positioned on the insert filter holder and be connected therewith so as to be detachable, as shown in Fig. 6.

The assembly of Fig. 6 can be used for preparing for instance one or two cups of coffee by means of a conventional, domestic coffee maker, as shown in Fig. 8. The coffee maker 20 according to Fig. 8 comprises a water reservoir 22 that can be filled with cold water. The water reservoir 22 comprises a transparent, vertical sidewall 24 provided with a graduation 26. The graduation 26 shows to what level the water reservoir 22 should be filled for preparing four, six, eight, ten or twelve cups of coffee. The coffee maker 20 further comprises a schematically shown heating element 28 which heats water from the water reservoir 22 and feeds it to a horizontal conduit 30. The horizontal conduit 30 comprises, adjacent a free end thereof, an outflow opening 32. The coffee maker further comprises a hotplate 34 on which, in this example, a coffee pot 36 is placed. Placed on the coffee pot 36 is a conventional filter holder 38.

If it is desired to prepare one or two cups of coffee in a conventional manner, one proceeds as follows. First, a quantity of water equal to the contents of two cups is introduced into the water reservoir 22. Further, a paper filter (filter bag) 40 is inserted into the filter holder 38. The paper filter 40 is filled with an amount of ground coffee. The ratio between the amount of ground coffee and the quantity of water is equal to the ratio between the amount of ground coffee and the quantity of water that would be used if, for instance, 10 cups of coffee were made. As shown in Fig. 7, the coffee bed 42 formed by the ground coffee on the bottom of the paper filter 40 has only a slight height h. When, subsequently, the filter holder with the paper filter 40 and the coffee bed 42 is placed on the coffee pot 36 and the coffee maker 20 is switched on, the entire quantity of water from the water reservoir 22 is within a short time heated and poured, via the tube 13 and the outflow opening 32, onto the coffee bed 42. There is thus formed in the coffee bed 42 a coffee extract which can leave the filter holder 38 via an opening 44 in the filter holder 38 to subsequently flow into the coffee pot 36. Experiments have shown that the coffee extract present in the coffee pot 36 is of poor flavor and experienced as weak. The coffee-making efficiency proves to be to the order of from 22 to 25%.

However, when the coffee is prepared by means of the assembly according to Fig. 6, a much better result is obtained. To this end, the insert filter holder is filled with the same amount of ground coffee as shown in Fig. 7. However, this same amount of coffee results in a much higher coffee bed 46, as shown in Fig. 6. The height of the coffee bed is here indicated by h'. Then, the water container 10 is positioned on the insert filter 1 and attached thereto by means of a bayonet catch 18. Of course, another known type of closure can be used as well, such as a screw-thread closure. The assembly of Fig. 6 is then placed in the filter holder 38 as is schematically shown in Fig. 8. In the example, the water reservoir 22 is again filled with a quantity of water corresponding to the volume of two cups. Then, the coffee maker 20 is switched on. After this, the heating element 28 heats the water coming from the water reservoir and feeds this water to the conduit 30. Via the outflow opening 32 of the conduit 30, the hot water ends up in the water container 10. In this manner, all the water contained in the water reservoir is heated and fed to the water container 10 within a relatively brief time. However, the outflow opening 14 of the water container has such dimensions, i.e. such a through-flow area, that the quantity of water that can flow per unit of time, via the outflow opening 14, to the ground coffee located in the insert filter holder, is limited to a predetermined maximum. Generally, this maximum will be less than the quantity of water that is fed to the water container by the multicup coffee maker per unit of time. In this example, the outflow opening 14 has such dimensions that the quantity of hot water fed to the ground coffee per unit of time is smaller by a factor 2.5 than the quantity of water leaving the outflow opening 32 of the conduit 30 per unit of time. As a consequence, the quantity of water fed to the ground coffee is independent of the coffee maker 20, because on the one hand the quantity of water fed to the ground coffee per unit of time has been reduced to a predetermined maximum value, and on the other because the height h' of the coffee bed is determined by the insert filter holder and the amount of ground coffee. Thus, there is presently obtained, by means of the conventional coffee maker, a coffee extract that is of good flavor and not too weak. More in particular, the coffee-making efficiency has increased by some percents to, for instance, 26-27%.

It is observed that the assembly of Fig. 6 is adapted to be placed in the tapering filter holder 38. For this purpose, the assembly in this example is of an at least substantially conical design. This has as an advantage that the assembly can readily be positioned in the filter holder, as shown in Fig. 8. Other suitable shapes wherein use is made of, for instance, supporting ribs extending outwards in radial direction of the assembly, are also conceivable. In the present exemplary embodiment, the water container 10 is entirely open at its upper end. This entirely open upper end in fact forms a feed opening. Of course, it is also possible to partly close the upper end of the water container 10 and provide it with a feed opening at its center only.

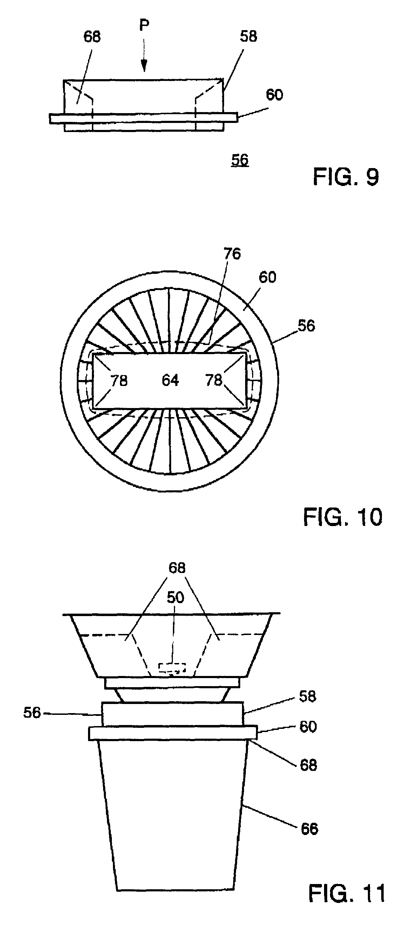

Hereinafter, it will be discussed in what manner the assembly of Fig. 6 can also be used for preparing coffee by means of a microwave oven. For this purpose, the water container further comprises a temperature-sensitive closing valve 50, as shown in Figs. 4 and 5. The closing valve has the property of closing the outflow opening 14 when the water container is filled with water having a temperature below a predetermined value. Further, the closing valve 50 releases the outflow opening 14 when the water container is filled with water having a temperature higher than or equal to the predetermined value. In this example, the closing valve 50 consists of an elongated bimetal connected, adjacent a first end 52, to the bottom 12 of the water container 10. The temperature-sensitive closing valve 50 extends lengthwise at least substantially in horizontal direction. The bimetal of the closing valve is located, adjacent its second end, directly above the outflow opening 14. The bimetal has its bottom side provided with a rubber closing cap 54. When the filter holder is filled with water having a temperature above or equal to the above-mentioned predetermined value, the rubber closing cap 54, slightly spaced above the outflow opening 14, as shown in Fig. 5, will pass the water. When, on the other hand, the water has a temperature below the above-mentioned predetermined value, the bimetal of the temperature-sensitive closing valve 50 will adopt a shape such that the rubber closing cap 54 moves downwards and, consequently, closes the outflow opening, which is schematically shown in dotted lines in Fig. 11.

The assembly further comprises an annular adapter 56 shown in Figs. 9 and 10. The annular adapter 56 has its outside provided with a cylindrical outer wall 58. Further, the annular adapter 56 comprises a flange 60 extending around the outer wall 58 at about half the height of the adapter. The annular adapter has its inside provided with inner walls 62 which obliquely taper towards each other from the top downwards. Thus, an inner space of conical shape is formed. The annular adapter 56 has its bottom side provided with an opening 64, which is rectangular in the example. For preparing one or two cups of coffee, the insert filter holder is filled with the same amount of coffee as described hereinabove in relation to Fig. 8. Then, the water container 10 is positioned on the insert filter holder 1 again and detachably connected thereto by means of the bayonet catch 18. Because the above-mentioned predetermined value for the temperature is approximately equal to 60°, the temperature-sensitive closing valve 50 will close the outflow opening 14. This implies that the water container 10 can be filled with the same quantity of cold water as described with reference to Fig. 8 in relation to the water reservoir 22. The annular adapter 56 is now placed on a coffee extract container in the form of a mug 66, the arrangement being such that the flange 60 of the adapter rests on the upper rim 68 of the mug 66. Subsequently, the coffee-filled insert filter holder 1 and the water-filled water container 10, already interconnected, are positioned on the adapter, the arrangement being such that the bottom side of the insert filter holder 1 extends into the inner space of the adapter 56. As this inner space of the adapter is of conical design and the bottom side of the insert filter holder 1 is likewise at least substantially conical, the insert filter holder 1 can be inserted into the adapter 56 in a stable manner. Thus, a configuration as shown in Fig. 11 is obtained. Then, the entire assembly is placed in the microwave oven, after which the microwave oven is switched on. Consequently, the temperature of the water contained in the water container will rise. When the temperature of the water is higher than or equal to the predetermined value of about 60°, the temperature-sensitive closing valve 50 will release the outflow opening 14. As a result, water of a proper temperature will be fed to the ground coffee contained in the insert filter holder 1. The quantity of hot water that is fed to the ground coffee per unit of time is again determined by the dimensions of the outflow opening 14 as described hereinabove. After some time, all the water will have been fed to the coffee bed and the coffee extract formed in the coffee bed will leave the insert filter holder via the filter 6. The coffee extract now flows, via the opening 64 of the adapter 56, to the mug 66. At the end of the coffee-making process, the microwave oven is switched off and the mug of coffee can be removed from the microwave oven. After this, the assembly can be used afresh for preparing a new quantity of coffee.

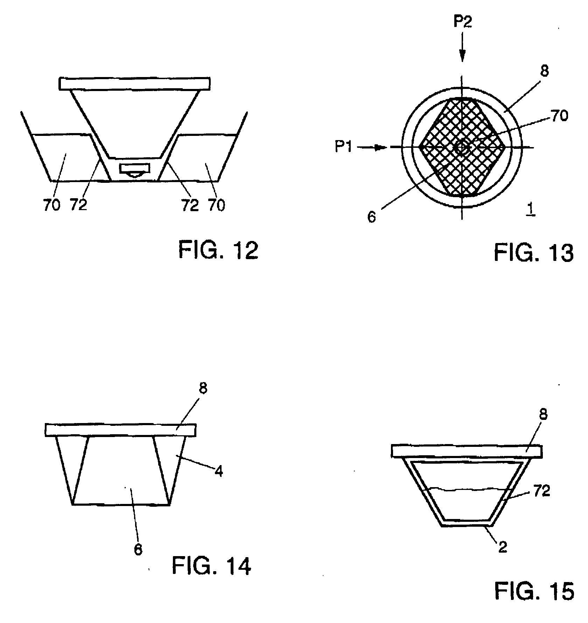

For the sake of completeness, it is observed that the invention is by no means limited to the above-described embodiment. For instance, the water container can for instance further comprise, on the inside thereof, supporting means 68 of a shape corresponding to the outside of the insert filter holder 1, as shown, inter alia, in Fig. 5. This provides the possibility of placing the insert filter holder in the water container from the open upper end of the water container, with the supporting means supporting the insert filter holder. This facilitates the filling of the insert filter holder with ground coffee. Fig. 12 is a transparent view of such a filling arrangement. The advantage is that during filling, a user need not hold the insert filter holder and keep it upright.

It is also possible that an insert filter holder is used wherein the portion 6 is not constructed as a metal filter, but as an impermeable wall. An example of this is shown in Figs. 13-15. In these Figures, an opening 70 is provided in the bottom part 2, while in the insert filter holder 1, a paper filter bag 72 is placed which, in use, is filled with coffee. For the rest, the alternative embodiment of the insert filter holder according to Figs. 13-15 is used as described hereinabove.

Also, it is possible to use the assembly as shown in Fig. 11 outside the microwave oven. In that case, the water container 10 can be manually filled with hot water, for instance from a whistling kettle.

In Fig. 10, the opening 64 of the adapter 56 is of rectangular design. This involves a portion of the insert filter holder 1 projecting above the adapter 56, as is clearly shown in Fig. 11. In particular, a portion of the gold filter 6 will likewise project above the adapter 56. As a result, it is possible that, in particular when much ground coffee is received in the insert filter holder, coffee extract passes out through the filter 6 at a position located above the adapter 56. The coffee extract could then possibly end up on the adapter 56. To prevent this, the opening 64 can be shaped so that the insert filter holder 1 and the adapter 56 contact each other only at, for instance, three or four points. This is shown in dotted lines in Fig. 10, by replacing the rectangular opening 64 by an opening having round sides 76. In that case, the filter holder 1 will rest on the corner points 78 of the opening. It is understood that in the case where the coffee extract flows through the filter at a level located above the adapter 56, it can flow through the opening 64 of the adapter 56 without any problem.

## Claims

1. An assembly for preparing a desired quantity of coffee corresponding to one or two cups of coffee and provided with a water container (10) for receiving water and an insert filter holder (1) for receiving ground coffee, wherein the water container (10) is positioned on top of the insert filter holder (1) and is provided with at least one outflow opening (14) which opens above the insert filter holder (1), the insert filter holder (1) comprises a filter forming (6) a barrier to the ground coffee and a passage for coffee extract, so that, in use, water flows from the water container (10) to the insert filter holder (1) via the outflow opening (14), and the coffee extract flows from the insert filter holder (1) via the filter (6), wherein the at least one outflow opening (14) has such a though-flow area from the water container (10), when it is filled with water, there flows to the filter holder (1), per unit of time, a quantity of water limited to a predetermined maximum, **characterized in that** the assembly is of substantially conical design, wherein the outer diameter of the assembly decreases at least substantially from the top downwards, so that the outward shape of the assembly is adapted to be placed in the tapering filter holder (38) of a multicup coffee maker (20) for preparing coffee by means of an existing multicup coffeemaker (20) wherein the water container (10) further comprises a temperature-sensitive closing valve (50) where said valve (50) closes the outflow opening (14) when the water container (10) is filled with water having a temperature lower than a predetermined value and which releases the outflow opening (14) when the water container (10) is filled with water having a temperature higher than or equal to the predetermined value, so that, in use, hot water is fed to the insert filter holder (1) when the water container (10) is filled with water having a temperature higher than or equal to said predetermined value, so that the assembly is also suitable for preparing coffee by means of a microwave oven.

2. An assembly according to claim 1, **characterized in that** the water container (10) comprises at its top side a feed opening for feeding water to the insert filter holder (1).

3. An assembly according to claim 1 or 2, **characterized in that** the water container (10) and the insert filter holder (1) are detachably interconnected.

4. An assembly according to claim 3, **characterized in that** the water container (10) and the insert filter holder (1) are detachably interconnected via a bayonet catch.

5. An assembly according to any one of the preceding claims, **characterized in that** the filter (6) of the insert filter holder (1) is formed by at least a part of a wall (4) of the insert filter holder (1), said part being provided with fine-mesh through-flow openings, or by a paper filter placed in the insert filter holder (1).

6. An assembly according to any of the preceding claims, **characterized in that** the temperature-sensitive closing valve (50) comprises a bimetal.

7. An assembly according to any of the proceeding claims, **characterized in that** the assembly is also designed for making coffee manually, wherein the assembly further comprises an annular adapter (56) suitable for being placed on a coffee extract container (66), such as a cup or a mug, and wherein the insert filter holder (1) can be placed, from the top side of the adapter (56), so that, in use, a bottom side of the insert filter holder (1) extends into an inner space of the adapter (56).

8. An assembly according to claim 7, **characterized in that** the inner space of the annular adapter (56) is of conical design, wherein the inner diameter of the annular adapter decreases downwards from the top.

9. An assembly according to claim 7 or 8, **characterized in that** the inner space of the adapter (56) is designed so that, in use, a free space is present between at least a part of the outside of the insert filter holder (1) and the inside of the adapter (56).

10. An assembly according to any of the preceding claims, **characterized in that** the water container (10) comprises, on the inside thereof, supporting means having a shape corresponding to the outside of the insert filter holder (1), so that via an open top side of the water container (10) the insert filter holder (1) can be placed in the water container (10), wherein the supporting means support the insert filter holder (1).

## Patentansprüche

1. Ein Set, um eine gewünschte Menge Kaffee, entsprechend ein oder zwei Tassen Kaffee, zuzubereiten, welches mit einem Wasserbehälter 10 ausgestattet ist, um das Wasser aufzunehmen, sowie mit einem eingesetzten Filterhalter 1, um gemahlenen Kaffee aufzunehmen, worin der Wasserbehälter 10 sich oben auf dem eingesetzten Filterhalter 1 befindet, und mit mindestens einer Auslauföffnung 14 versehen ist, die oberhalb des eingesetzten Filterhalters1 mündet, und bei dem der eingesetzte Filterhalter 1 einen Filter 6, der eine Barriere für den gemahlenen Kaffee und eine Passage für Kaffeeextrakt darstellt, beinhaltet, so dass, im laufenden Gebrauch, Wasser aus dem Wasserbehälter 10 durch die Auslauföffnung 14 in den eingesetzten Filterhalter 1 fliesst, und der Kaffeeextrakt von dem eingesetzten Filterhalter 1 über den Filter 6, in dem mindestens eine Auslauföffnung 14 vorhanden ist, die über eine so geartete Durchlauffläche verfügt, dass aus dem Wasserbehälter 10, wenn er mit Wasser gefüllt ist pro Zeiteinheit eine Menge Wasser in den Filterhalter 1 fliesst, die auf ein vorher festgelegtes Maximum limitiert ist, und bei dem das Set dadurch charakterisiert ist, dass es im Wesentliche eine konische Gestalt aufweist, bei welcher der äussere Durchmesser im Wesentlichen von oben nach unten abnimmt, wodurch die äussere Form des Sets an das Einsetzen in den spitz zulaufenden Filterhalter 38 einer Kaffeemaschine 20 für viele Tassen angepasst ist, um mit Hilfe einer bereits existierenden Kaffeemaschine 20 Kaffee zuzubereiten, wobei der Wasserbehälter 10 ausserdem ein temperatursensitives Absperrventit 50 beinhaltet, und besagtes Absperrventil 50 die Auslauföffnung 14 dann verschliesst, wenn der Wasserbehälter 10 mit Wasser gefüllt ist, dessen Temperatur unterhalb eines vorgegebenen Wertes liegt, und es die Auslauföffnung 14 frei gibt, wenn der Wasserbehälter 10 mit Wasser gefüllt ist, dessen Temperatur höher oder gleich dem vorbestimmten Wert ist, so dass im laufenden Gebrauch heisses Wasser in den eingesetzten Filterhalter 1 eingefüllt wird, sobald der Wasserbehälter 10 mit Wasser gefüllt ist, das eine Temperatur höher oder gleich dem besagten, vorgegebenen Wert aufweist, wodurch das Set auch dafür geeignet ist, Kaffee mit Hilfe eines Mikrowellenofens zuzubereiten.

2. Ein Set mit den Merkmalen des Anspruchs 1, das dadurch charakterisiert ist, dass der Wasserbehälter 10 an seiner Oberseite eine Einfüllöffnung für das Einfüllen von Wasser in den eingesetzten Filterhalter 1 ausweist.

3. Ein Set mit den Merkmalen der Ansprüche 1 oder 2, das dadurch charakterisiert ist, dass der Wasserbehälter 10 und der eingesetzte Filterhalter 1 lose miteinander verbunden sind.

4. Ein Set mit den Merkmalen des Anspruchs 3, das dadurch charakterisiert ist, dass der Wasserbehälter 10 und der eingesetzte Filterhalter 1 durch einen Bajonettverschluss lose miteinander verbunden sind.

5. Ein Set mit den Merkmalen aller vorausgegangenen Ansprüche, das dadurch charakterisiert ist, dass der Filter 6 des eingesetzten Filterhalters 1 entweder wenigstens zu einem Teil aus einer Wand 4 des eingesetzten Filterhalters 1 gebildet wird, wobei besagter Teil mit feinmaschigen Durchfluss-Öffnungen versehen ist, oder durch einen Papierfilter, der in des eingesetzten Filterhalter 1 eingebracht wird.

6. Ein Set mit den Merkmalen aller vorausgegangenen Ansprüche, das dadurch charakterisiert ist, dass das temperatursensitive Absperrventil 50 ein Bimetall-Stück beinhaltet.

7. Ein Set mit den Merkmalen aller vorausgegangenen Ansprüche, das dadurch charakterisiert ist, dass das Set auch darauf zugeschnitten ist, Kaffee manuell aufzugiessen, wobei das Set zusätzlich einen ringförmigen Adapter 56 beinhaltet, der geeignet ist, auf einen Behälter 66 für das Auffangen von Kaffeeextrakt, wie etwa eine Tasse oder einen Becher, aufgesetzt zu werden, und wobei der eingesetzte Filterhalter 1 so auf die Oberseite des Adapters 56 plaziert werden kann, dass im laufenden Gebrauch eine Unterseite des eingesetzten Filterhalters 1 in den inneren Raum des Adapters 56 hinein ragt.

8. Ein Set mit den Merkmalen des Anspruchs 7, das dadurch charakterisiert ist, dass der innere Raum des ringförmigen Adapters 56 eine konische Form hat, wobei die innere Abmessung des ringförmigen Adapters von oben nach unten abnimmt.

9. Ein Set mit den Merkmalen der Ansprüche 7 oder 8, das dadurch charakterisiert ist, dass der innere Raum des ringförmigen Adapters 56 so geformt ist, dass im Gebrauch ein freier Zwischenraum wenigstens zwischen einem Teil der Aussenseite des eingesetzten Filterhalters 1 und der Innenseite des Adapters 56 vorhanden ist.

10. Ein Set mit den Merkmalen aller vorausgegangenen Ansprüche, das dadurch charakterisiert ist, dass der Wasserbehälter 10 an seiner Innenseite Tragevorrichtungen beinhaltet, die eine Form haben, welche mit der Aussenseite des eingesetzten Filterhalters 1 korrespondiert, so dass der eingesetzte Filterhalter 1 durch eine offenen Oberseite des Wasserbehälters 10 in den Wasserbehälter 10 eingesetzt werden kann, wobei die Tragevorrichtungen den eingesetzten Filterhalter 1 stützen.

## Revendications

1. Ensemble destiné à préparer une quantité désirée de café correspondant à une ou deux tasses de café et muni d'un réservoir d'eau (10) destiné à recevoir de l'eau et un porte-filtre rapporté (1) destiné à recevoir du café moulu, dans lequel le réservoir d'eau (10) est positionné sur la partie supérieure du porte-filtre rapporté (1) et est muni d'au moins une ouverture d'écoulement (14) qui s'ouvre au-dessus du porte-filtre rapporté (1), le porte-filtre rapporté (1) comprend un filtre (6) formant une barrière au café moulu et un passage pour l'extrait de café, de sorte qu'en utilisation, de l'eau s'écoule à partir du réservoir d'eau (10) vers le porte-filtre rapporté (1) par l'intermédiaire de l'ouverture d'écoulement (14), et l'extrait de café s'écoule à partir du porte-filtre rapporté (1) par l'intermédiaire du filtre (6), dans lequel la au moins une ouverture d'écoulement (14) comporte une zone à écoulement direct de sorte qu'à partir du réservoir d'eau (10), lorsqu'il est rempli avec de l'eau, il s'écoule vers le porte-filtre (1), par unité de temps, une quantité d'eau limitée à un maximum prédéterminé, **caractérisé en ce que** l'ensemble est de conception sensiblement conique, où le diamètre extérieur de l'ensemble diminue au moins sensiblement à partir du haut vers le bas, de sorte que la forme extérieure de l'ensemble est conçue pour être placée dans le porte-filtre effilé (38) d'une machine à café à plusieurs tasses (20) en vue de préparer du café au moyen d'une machine à café à plusieurs tasses existantes (20) où le réservoir d'eau (10) comprend en outre un clapet de fermeture sensible à la température (50) où ledit clapet (50) ferme l'ouverture d'écoulement (14) lorsque le réservoir d'eau (10) est rempli d'eau présentant une température inférieure à une valeur prédéterminée et qui libère l'ouverture d'écoulement (14) lorsque le réservoir d'eau (10) est rempli d'eau présentant une température supérieure ou égale à la valeur prédéterminée, de sorte qu'en utilisation de l'eau chaude est appliquée au porte-filtre rapporté (1) lorsque le réservoir d'eau (10) est rempli d'eau présentant une température supérieure ou égale à ladite valeur prédéterminée, de sorte que l'ensemble est également approprié en vue de préparer du café au moyen d'un four micro-ondes.

2. Ensemble selon la revendication 1, **caractérisé en ce que** le réservoir d'eau (10) comprend au niveau de son côté supérieur une ouverture d'alimentation destinée à alimenter en eau le porte-filtre rapporté (1).

3. Ensemble selon la revendication 1 ou 2, **caractérisé en ce que** le réservoir d'eau (10) et le porte-filtre rapporté (1) sont reliés mutuellement de façon amovible.

4. Ensemble selon la revendication 3, **caractérisé en ce que** le réservoir d'eau (10) et le porte-filtre rapporté (1) sont reliés mutuellement de façon amovible par l'intermédiaire d'une fermeture à baïonnette.

5. Ensemble selon l'une quelconque des revendications précédentes, **caractérisé en ce que** le filtre (6) du porte-filtre rapporté (1) est formé par au moins une partie d'une paroi (4) du porte-filtre rapporté (1), ladite partie étant munie d'ouvertures à écoulement direct à petites mailles, ou bien par un filtre de papier placé dans le porte-filtre rapporté (1).

6. Ensemble selon l'une quelconque des revendications précédentes, **caractérisé en ce que** le clapet de fermeture sensible à la température (50) comprend un bilame.

7. Ensemble selon l'une quelconque des revendications précédentes, **caractérisé en ce que** l'ensemble est également conçu pour faire du café manuellement, dans lequel l'ensemble comprend en outre un dispositif d'adaptation annulaire (56) approprié pour être placé sur un récipient pour extrait de café (66), tel qu'une tasse ou un gobelet, et où le porte-filtre rapporté (1) peut être placé, à partir du côté supérieur du dispositif d'adaptation (56) de sorte qu'en utilisation un côté inférieur du porte-filtre rapporté (1) s'étend dans un espace intérieur du dispositif d'adaptation (56).

8. Ensemble selon la revendication 7, **caractérisé en ce que** l'espace intérieur du dispositif d'adaptation annulaire (56) est de conception conique, où le diamètre intérieur du dispositif d'adaptation annulaire diminue vers le bas depuis la partie supérieure.

9. Ensemble selon la revendication 7 ou 8, **caractérisé en ce que** l'espace intérieur du dispositif d'adaptation (56) est conçu de sorte qu'en utilisation un espace libre est présent entre au moins une partie de l'extérieur du porte-filtre rapporté (1) et l'intérieur du dispositif d'adaptation (56).

10. Ensemble selon l'une quelconque des revendications précédentes, **caractérisé en ce que** le réservoir d'eau (10) comprend, à l'intérieur de celui-ci, un moyen de support présentant une forme correspondant à l'extérieur du porte-filtre rapporté (1) de sorte que par l'intermédiaire d'un côté supérieur ouvert du réservoir d'eau (10), le porte-filtre rapporté (1) peut être placé dans le réservoir d'eau (10), où le moyen de support supporte le porte-filtre rapporté (1).
